# NEUE EUROPÄISCHE PATENTSCHRIFT

(11) **EP 1 028 387 B2**
(45) Veröffentlichungstag und Bekanntmachung des Hinweises auf die Entscheidung über den Einspruch: **02.11.2011**
(45) Hinweis auf die Patenterteilung: 04.10.2006
(21) Anmeldenummer: 00100558.6
(22) Anmeldetag: 12.01.2000
(51) Int. Cl.: G06K 9/20, G05D 1/03, G08G 1/0967, B60K 31/00

(54) **Einrichtung zur Umfelderkennung, insbesondere zur Verkehrszeichenerkennung**
Device for recognizing the environment, in particuliar for recognising traffic road signs
Dispositif de reconnaissance de l'environnement, en particulier la reconnaissance de panneaux de signalisation routière

(30) Priorität: 12.02.1999 DE 29902457 U
(43) Veröffentlichungstag der Anmeldung: 16.08.2000
(73) Patentinhaber: ROBERT BOSCH GMBH, 70442 Stuttgart (DE)
(72) Erfinder: Janssen, Holger, 31787 Hameln (DE); Schmedding, Rainer, 31199 Diekholzen (DE); Baierl, Wolfgang, 73630 Remshalden (DE)

(56) Entgegenhaltungen:
- EP-A- 0 738 872
- WO-A1-94/28377
- DE-A1- 4 235 046
- DE-C1- 4 336 288
- DE-U- 29 802 953
- DE-U1- 29 807 969
- JP-A- 9 079 845
- US-A- 5 410 346
- US-A- 5 574 443
- US-A- 5 699 057
- US-A- 5 835 880
- PATENT ABSTRACTS OF JAPAN vol. 1997, no. 11, 28. November 1997 (1997-11-28) & JP 09 185703 A (MITSUBISHI MOTORS CORP), 15. Juli 1997 (1997-07-15)
- SPHEREO: DETERMINING DEPTH USING TWO SPECULAR SPHERES AND A SINGLE CAMERA SPIE VOL. 1005 OPTICS, ILLUMINATION, AND IMAGE SENSING FOR MACHINE VISION III 1988 - 1988, PENNSYLVANIA, Seiten 245 - 254

## Beschreibung

### Stand der Technik

Die Erfindung geht aus von einer Umfelderkennungseinrichtung nach der Gattung des unabhängigen Anspruchs. Aus der DE 40 23 952 C2 ist schon eine Verkehrszeichenerkennungseinrichtung bekannt, bei der ein Bildverarbeitungsverfahren zur Verkehrszeichenerkennung eingesetzt wird.

Die US 5,574,443 offenbart eine Kraftfahrzeugüberwachungsvorrichtung umfassend eine an der Rückseite des Kraftfahrzeuges befestigten rückwärtigen Kamera, einer am rechten Seitenspiegel montierten Kamera und einer am linken Seitenspiegel montierten Kamera.

### Vorteile der Erfindung

Die erfindungsgemäße Umfelderkennungseinrichtung mit den kennzeichnenden Merkmalen des unabhängigen Anspruchs hat demgegenüber den Vorteil, daß sicher, mit einfachen Mitteln und/oder automatisiert im Straßenverkehr aufgestellte Verkehrszeichen oder Verkehrshindernisse vom Kraftfahrzeug aus erkannt werden können.

Weitere Vorteile ergeben sich durch die in den Unteransprüchen genannten Merkmale.

Kameras mit überlappendem Bildbereich ermöglichen die dreidimensionale sichere und robuste Berechnung geometrischer und bildlicher Größen im Zusammenhang mit

Verkehrszeichen, wie beispielsweise Standort und Art des Verkehrszeichens aus Momentanaufnahmen der Kameras, d.h. sie ermöglichen eine instantane und genaue Erkennung und Berechnung aus einer Momentaufnahme, ohne den zeitlichen Verlauf von Bilddaten innerhalb eines bestimmten Zeitfensters (Sicherheitsrisiko!) abwarten zu müssen. Durch die mögliche dreidimensionale Verkehrszeichenerkennung wird es darüberhinaus möglich, weitere dreidimensionale Größen wie zum Beispiel Form, Orientierung und reale Größe, seitlicher Abstand erkannter Verkehrszeichen vom Fahrzeug und Abstand in Fahrtrichtung vom Fahrzeug zuverlässig zu vermessen, was wiederum einer sicheren Klassifikation, d.h. Bedeutungszuweisung, erkannter Verkehrszeichen dienlich ist.

Eine rückwärtige Anordnung der Kameraeinrichtung ermöglicht beispielsweise eine breite Sicht auf Hindernisse beim Einparkvorgang, wenn das Stereovideosignal beispielsweise auf einem Bildschirm, der im Sichtbereich des Fahrzeugführers angeordnet ist, angezeigt wird. Sind die Kameras insbesondere so ausgerichtet, daß sich die optischen Achsen der Kameras im Gesichtsfeld der Kameras schneiden, so sind vorteilhafterweise bildaufnehmende Elemente mit größerer Brennweite möglich, wodurch sich ein Fischaugeneffekt vermeiden läßt. Auch kann vorgesehen sein, dem Fahrer durch Berechnung des Abstands aus dem stereoskopischen Videosignal (d.h. den Umfeldbilddaten des Überlappungsbereichs der Gesichtsfelder des beispielsweise binokularen Kamerasystems) über eine Zahlenanzeige oder akustische Anzeige den verbleibenden Abstand zum rückwärtig stehenden Fahrzeug instantan anzugeben.

### Zeichnung

Die Erfindung ist anhand der Zeichnung dargestellt und nachfolgend näher beschrieben. Es zeigen Figur 1 eine Verkehrszeichenerkennungseinrichtung, Figur 2 eine Anordnung von Kamerapositionen, Figur 3 eine Verkehrsszene, Figur 4 Verkehrsschilder sowie Figur 5 eine weitere Verkehrsszene.

### Beschreibung der Ausführungsbeispiele

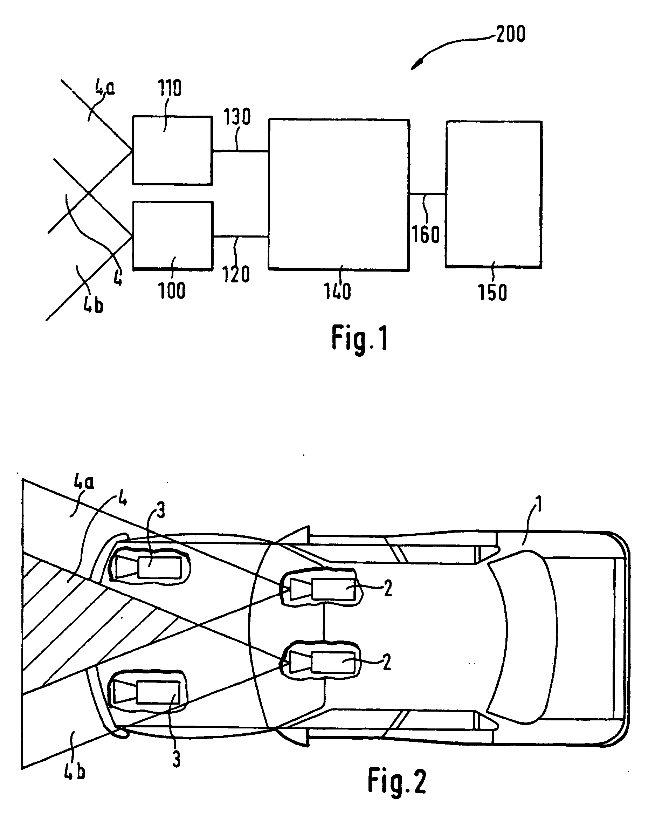

Figur 1 zeigt eine Verkehrszeichenerkennungseinrichtung 200 mit einer ersten Kamera 100 und einer zweiten Kamera 110. Die Kameras haben jeweils ein Blickfeld 4a beziehungsweise 4b, wobei die Blickfelder einen Überlappungsbereich 4 aufweisen. Die Kameras sind über Verbindungsleitungen 120 beziehungsweise 130 mit einer Bildverarbeitungseinheit 140 verbunden, wobei über eine Verbindungsleitung 160 eine Datenausgabe-/weiterleitungseinheit 150 an die Bildverarbeitungseinheit angeschlossen ist.

Die Kameras liefern eine stereoskopische Videosequenz an die Bildverarbeitungseinheit, die mittels dreidimensionaler Mustererkennung und Bildverarbeitung Verkehrszeichen detektiert und klassifiziert. Das Ergebnis der Mustererkennung bzw. Bildverarbeitung wird über die Einheit 150 beispielsweise einem Fahrzeugführer angezeigt, beipielsweise in der Form einer bildlichen Wiedergabe des erkannten Verkehrszeichens auf einem Anzeigefeld im Innern des Kraftfahrzeugs oder in einem Head-up-Display im Bereich der Frontscheibe, auch können detaillierte Warnhinweise wie beispielsweise "Achtung - Geschwindigkeitsbeschränkung", oder "Noch 50 Meter bis zur nächsten gleichberechtigten Straßenkreuzung!" ausgegeben werden.

Alternativ oder in Kombination zur obengenannten Funktion können die Erkennungs/Klassifikationsdaten an eine Hilfseinrichtung, die auch im Fahrzeug des Fahrzeugführers angeordnet ist, weitergeleitet werden, um die Funktionssicherheit dieses weiteren Systems zu erhöhen, insbesondere eines Navigationssystems.

Die Kameras können Schwarzweißkameras oder Farbkameras sein, je nach Anforderung an die Verkehrszeichenerkennungseinrichtung. Als Aufnahmetechnologien können CCD-Anordnungen (CCD = Charge Coupled Device) oder HDRC-Systeme (HDRC = High Dynamic Range Camera) eingesetzt werden, wobei letztere aufgrund nichtlinearer Kennlinien im Videosignal-Helligkeits-Diagramm eine höhere Helligkeitsdynamik im Vergleich zu CCD-Anordnungen aufweisen.

Figur 2 zeigt ein Fahrzeug 1 in Draufsicht. Im Fahrzeug sind beispielhaft zwei alternative Kamerapositionen 2 bzw. 3 eines binokularen Kamerasystems zur Aufnahme von Umfeldbilddaten, insbesondere von Umfeldbilddaten einer Straßensituation, angegeben. Die Position 2 beschreibt eine Anordnung hinter der Windschutzscheibe, vorteilhafterweise im Wirkbereich der Scheibenwischer. Die Position 3 beschreibt eine Anordnung im Bereich der Scheinwerfer des Fahrzeugs 1. Alternative Positionen, an denen Verkehrszeichen registriert werden können, sind ebenfalls möglich. In jedem Fall weisen dabei die Blickfelder 4a und 4b des Kamerapaars einen Überlappungsbereich 4 auf; eingezeichnet wurden die Blickfelder der Einfachheit halber lediglich für die Kameraposition 2. Die in der Beschreibung zur Figur 1 erläuterte Bildverarbeitungseinrichtung ist hier nicht bildlich wiedergegeben, kann man sich jedoch an jedem beliebigen Ort im Fahrzeug angeordnet denken.

Das binokulare Kamerasystem nimmt während der Fahrt, angelehnt an die Fähigkeit des Menschen, Straßensituationen zu interpretieren, stereoskopische Videosequenzen auf; die Bildverarbeitungseinheit kann dabei aus jeder Momentaufnahme Verkehrszeichenerkennungs- bzw. Verkehrszeichenklassifikationsdaten generieren und wie bereits beschrieben über eine Einheit 150 (siehe Figur 1) dem Fahrer oder einem anderen Hilfssystem im Fahrzeug zur Verfügung stellen.

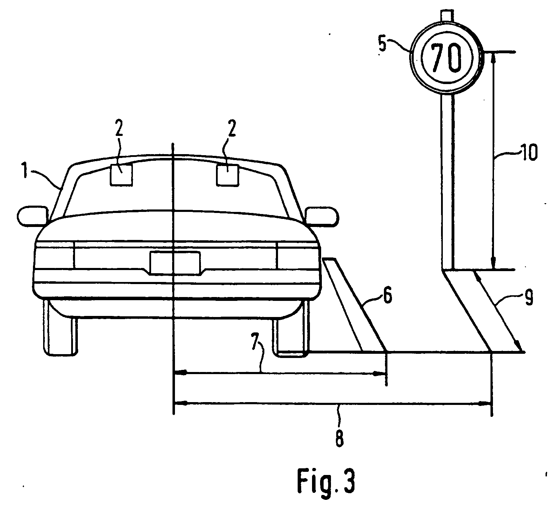

Figur 3 zeigt beispielhaft eine Verkehrsszene mit einem Verkehrszeichen 5 mit einer Höhe 10. Das Verkehrszeichen hat einen Abstand 9 in Fahrtrichtung und einen seitlichen Abstand 8 zum Fahrzeug, das in Rückansicht dargestellt ist. Eine zwischen dem Fahrzeug 1 und dem Verkehrszeichen 5 angeordnete Fahrbahnmarkierung 6 hat einen seitlichen Abstand 7 zum Fahrzeug.

Mithilfe des binokularen Kamerasystems kann sowohl der seitliche Abstand 8 als auch der Abstand 9 des Verkehrszeichens vom Fahrzeug 1 bestimmt werden. Auch die Höhe 10 kann instantan durch Auswertung entsprechender stereoskopischer Videosignale berechnet werden. Eine entsprechende Auswertung kann auch für die Fahrbahnmarkierung erfolgen, woraus wiederum zusammen mit den Verkehrszeichendaten der Abstand zwischen Verkehrszeichen und Fahrbahnmarkierung errechnet werden kann.

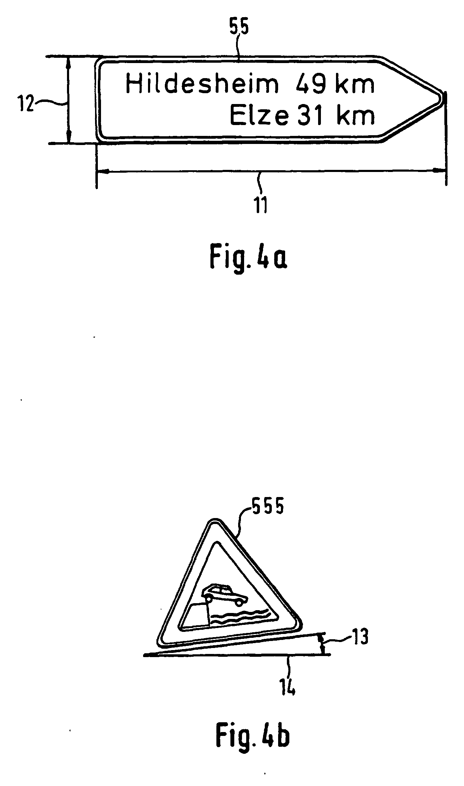

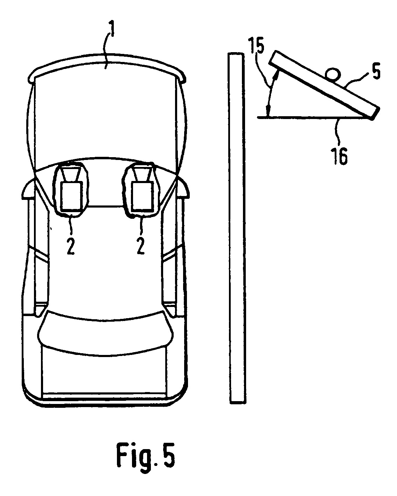

Figur 4 und 5 zeigen Beispiele weiterer, unterschiedlich geformter bzw. ausgerichteter Verkehrszeichen. Figur 4a zeigt ein Richtungsanzeigeschild 55 mit einer Breite 11 und einer Höhe 12. Figur 4b zeigt ein Gefahrenhinweisschild 555, das relativ zur horizontalen Ausrichtung 14 des binokularen Kamerasystems einen Kippwinkel 13 aufweist. Figur 5 zeigt ein Verkehrszeichen 5, das relativ zur Orientierung 16 der Fahrzeugquerachse einen Drehwinkel 15 aufweist.

Für unterschiedlich geformte Verkehrszeichen, wie beispielhaft in Figur 4a, 4b und 5 dargestellt, können mittels des binokularen Kamerasystems 100, 110 unterschiedliche Größen wie Breite 11, Höhe 12, Kippwinkel 13 und Drehwinkel 15 mit hoher Zuverlässigkeit unter Einsatz eines Mustererkennungsverfahrens vermessen werden, um eine robuste Verkehrszeichenerkennung und -klassifizierung an Bord des Kraftfahrzeugs zu ermöglichen. Ein in der Bildverarbeitungseinheit in einem Speicher abgelegtes dreidimensionales Modell eines Verkehrszeichens weist hierbei jedem Verkehrszeichen wahlweise oder in Kombination folgende geometrische Größen zu, wobei anhand der Form des Verkehrszeichens eine Vorklassifikation erfolgen kann:
1. Position des Verkehrszeichens relativ zum Fahrzeug: Abstand 9 in Fahrtrichtung, seitlicher Abstand 8 vom Fahrzeug, Höhe 10 des Verkehrszeichens über der Fahrbahn oder über dem Fahrzeug;
2. Form des Verkehrszeichens: rund, dreieckig, viereckig, achteckig;
3. Abmessungen des Verkehrszeichens: Durchmesser, Breite 11, Höhe 12;
4. Orientierung des Verkehrszeichens: Kippwinkel 13, Drehwinkel 15;
5. Zuordnung zu anderen Verkehrszeichen, beispielsweise das Zusatzzeichen "nur bei Nässe" zu einem Verkehrszeichen, das eine Geschwindigkeitsbeschränkung angibt.
In einer nicht zur Erfindung gehörenden Ausführungsform kann die Bildverarbeitungseinheit bei entsprechend geeignet angeordneten Kameras gleichzeitig vorausfahrende bzw. stehende Fahrzeuge erkennen und registrieren, ob ein erkanntes Fahrzeug im Vorderfeld steht oder rollt. Damit läßt sich ein automatisches "Stop and Go" realisieren. Die Berechnung des Abstands zu vorausfahrenden oder -stehenden Fahrzeugen kann zu automatischen Eingriffen in die Brems- und Motorsteuerung des Fahrzeugs eingesetzt werden (ACC, Automatic Cruise Control). Absatz Ferner kann eine Auswertung der Fahrspuren erfolgen zur automatischen Ansteuerung der Scheinwerferausrichtungen bzw. zur Auslösung eines Alarms, sobald das Fahrzeug an den Straßenrand gerät. In diesem Zusammenhang ist auch die Ansteuerung eines akustischen Einschlafwarners möglich. Ferner sind die errechneten Fahrbahndaten geeignet zur Ansteuerung einer automatischen Lenkung.

Erfindungsgemäß kann die Umfelderkennungseinrichtung im Kraftfahrzeug als Rückfahrkamera eingesetzt werden. Dabei ist das Kamerasystem 100, 110 im Bereich des Stoßfängers installiert, so daß im rückwärtigen Bereich des Kraftfahrzeugs der gesamte Bereich des Stoßfängers vom Kamerasystem erfaßt wird. Die optischen Achsen der Kameras überlappen sich hierbei im Gesichtsfeld der Kameras, wodurch sich der Bildbereich im rückwärtigen Raum des Kraftfahrzeugs vergrößert und der rückwärtige Raum inklusive Stoßfänger erfaßt werden kann, was bei direkter Bildausgabe dem Fahrer die Einschätzung des Abstands erleichtert. Infolge sich schneidender optischer Achsen sind Objektive mit relativ großer Brennweite möglich und der Fischaugeneffekt wird vermieden. Die Bildverarbeitungseinheit liefert das erfaßte Bild direkt an eine als Bildausgabeeinheit ausgebildete Datenausgabeeinheit 150, nachdem sie die Bilddaten entsprechend den sich kreuzenden optischen Achsen der Kameras korrigiert hat. In einer weiteren Ausführungsform ist die Bildverarbeitungseinheit derart ausgebildet, aus den stereoskopischen Umfeldbilddaten den Abstand des Hindernisses von der Stoßstange des Fahrzeugs zu berechnen und dem Fahrzeugführer über eine eine Zahlenanzeige oder akustische Anzeige (ansteigender Ton, schneller werdende Pulsfolge in Abhängigkeit vom verbleibenden Abstand o.ä.) aufweisende Datenausgabeeinheit 150 mitzuteilen. In einer weiteren Ausführungsform ist auch eine automatische Objektdetektion im rückwärtigen Fahrzeugraum vorsehbar.

## Patentansprüche

1. Umfelderkennungseinrichtung (200) in einem Kraftfahrzeug (1) mit einer Kameraeinrichtung (100) zur Generierung von Videosignalen aus Umfeldbilddaten, wobei die Kameraeinrichtung mindestens zwei Kameras (100, 110) mit überlappenden Gesichtsfeldern (4a, 4b) aufweist, **dadurch gekennzeichnet, daß** die Kameraeinrichtung in der Nähe eines rückwärtigen Stoßfängers des Kraftfahrzeuges angeordnet ist zur Aufnahme der Umfeldbilddaten im rückwärtigen Raum des Kraftfahrzeugs, wobei die optischen Achsen der mindestens zwei Kameras sich im Bereich der Gesichtsfelder schneiden.

2. Einrichtung nach Anspruch 1, **dadurch gekennzeichnet, daß** die Einrichtung eine Bildverarbeitungseinheit (140) aufweist, wobei die Videosignale der Bildverarbeitungseinheit zugeführt wird zur Detektion von Verkehrszeichen in den Umfeldbilddaten.

3. Einrichtung nach Anspruch 2, **dadurch gekennzeichnet, daß** die Bildverarbeitungseinheit (140) im Falle der Detektion eines Verkehrszeichens das detektierte Verkehrszeichen klassifiziert.

4. Einrichtung nach Anspruch 2, **dadurch gekennzeichnet, daß** die Bildverarbeitungseinheit (140) neben der Detektion von Verkehrszeichen zur Detektion von Fahrbahnrändern und/_oder von vorausfahrenden und/_oder stehenden Fahrzeugen ausgebildet ist.

5. Einrichtung nach einem der Ansprüche 1 bis 4, **dadurch gekennzeichnet, daß** die Kameraeinrichtung (100) im Scheinwerferbereich eines Fahrzeugs angeordnet ist.

6. Einrichtung nach Anspruch 1, **dadurch gekennzeichnet, daß** die Einrichtung eine Bildverarbeitungseinheit (140) aufweist, wobei das Videosignal der Bildverarbeitungseinheit (140) zugeführt wird zur Detektion mindestens eines Hindernisses im rückwärtigen Raum des Kraftfahrzeugs, insbesondere während eines Einparkvorgangs.

7. Einrichtung nach Anspruch 6, **dadurch gekennzeichnet, daß** die Bildverarbeitungseinheit (140) den Abstand des Hindernisses aus den Umfeldbilddaten des Überlappungsbereichs der Gesichtsfelder ermittelt und dem Fahrzeugführer meldet.

## Claims

1. Device (200) for recognizing the surroundings, in a motor vehicle (1) having a camera device (100) for generating video signals from image data from the surroundings, the camera device having at least two cameras (100, 110) with overlapping fields (4a, 4b) of vision, **characterized in that** the camera device is arranged in the vicinity of a rear bumper of the motor vehicle in order to record image data from the surroundings in the area behind the motor vehicle, the optical axes of the at least two cameras intersecting in the region of the fields of vision.

2. Device according to Claim 1, **characterized in that** the device has an image processing unit (140), the video signals being fed to the image processing unit in order to detect road signs in the image data from the surroundings.

3. Device according to Claim 2, **characterized in that**, if a road sign is detected, the image processing unit (140) classifies the detected road sign.

4. Device according to Claim 2, **characterized in that** the image processing unit (140) is designed both to detect road signs and to detect the edges of a carriageway and/or vehicles travelling ahead and/or stationary vehicles.

5. Device according to one of Claims 1 to 4, **characterized in that** the camera device (100) is arranged in the headlight area of a vehicle.

6. Device according to Claim 1, **characterized in that** the device has an image processing unit (140), the video signal being fed to the image processing unit (140) to detect at least one obstacle in the area behind the motor vehicle, in particular during a parking procedure.

7. Device according to Claim 6, **characterized in that** the image processing unit (140) uses the image data from the surroundings in the overlapping region of the fields of vision to determine the distance from the obstacle and signal it to the driver of the vehicle.

## Revendications

1. Dispositif de reconnaissance de l'environnement (200) dans un véhicule automobile (1), comprenant un dispositif de caméra (100) pour la génération de signaux vidéo à partir de données image de l'environnement, le dispositif de caméra présentant au moins deux caméras (100, 110) ayant des champs de vision se chevauchant (4a, 4b),
**caractérisé en ce que**
le dispositif de caméra est disposé à proximité d'un pare-chocs arrière du véhicule automobile, afin de saisir les données image de l'environnement dans l'espace arrière du véhicule automobile, les axes optiques d'au moins deux caméras se croisant dans la zone des champs de vision.

2. Dispositif selon la revendication 1,
**caractérisé en ce que**
le dispositif présente une unité de traitement d'image (140), les signaux vidéo étant envoyés à l'unité de traitement d'image pour la détection de panneaux de signalisation routière dans les données image de l'environnement.

3. Dispositif selon la revendication 2,
**caractérisé en ce que**
l'unité de traitement d'image (140), en cas de détection d'un panneau de signalisation routière, classifie le panneau de signalisation routière détecté.

4. Dispositif selon la revendication 2,
**caractérisé en ce que**
l'unité de traitement d'image (140) est configurée, outre pour la détection de panneaux de signalisation routière, également pour la détection de bordures de chaussée et/ou de véhicules qui précèdent et/ou qui stationnent.

5. Dispositif selon l'une des revendications 1 à 4,
**caractérisé en ce que**
le dispositif de caméra (100) est disposé dans la zone des phares d'un véhicule.

6. Dispositif selon la revendication 1,
**caractérisé en ce que**
le dispositif présente une unité de traitement d'image (140), le signal vidéo étant envoyé à l'unité de traitement d'image (140) pour la détection d'au moins un obstacle dans la zone arrière du véhicule automobile, en particulier pendant une manoeuvre de stationnement.

7. Dispositif selon la revendication 6,
**caractérisé en ce que**
l'unité de traitement d'image (140) détermine la distance de l'obstacle à partir des données image de l'environnement de la zone de chevauchement des champs de vision et la signale au conducteur.
